## Europäisches Patentamt
## European Patent Office
## Office européen des brevets

(11) Veröffentlichungsnummer: **0 351 660**
**A2**

# (12) EUROPÄISCHE PATENTANMELDUNG

(21) Anmeldenummer: 89112400.0

(22) Anmeldetag: 07.07.89

(51) Int. Cl.⁴: **C08J 3/22** , **C08K 3/04** , **C08L 81/04**

(30) Priorität: 20.07.88 DE 3824516

(43) Veröffentlichungstag der Anmeldung:
**24.01.90 Patentblatt 90/04**

(84) Benannte Vertragsstaaten:
**BE CH DE ES FR GB IT LI NL**

(71) Anmelder: **BAYER AG**

**D-5090 Leverkusen 1 Bayerwerk(DE)**

(72) Erfinder: **Dziurla, Heinz-Jürgen**
**Solinger Strasse 35**
**D-5090 Leverkusen(DE)**
Erfinder: **Reinking, Klaus, Dr.**
**Robert-Stolz-Strasse 16b**
**D-5632 Wermelskirchen(DE)**
Erfinder: **Kraft, Klaus, Dr.**
**Doerperhofstrasse 15**
**D-4150 Krefeld(DE)**
Erfinder: **Tresper, Erhard, Dr.**
**Moerser Strasse 394**
**D-4150 Krefeld 1(DE)**

(54) **Leitfähige Polymermischungen.**

(57) Die Erfindung betrifft leitfähige Abmischungen aus thermoplastischen Kunststoffen wie Polyethylen- und butylenterephthalaten (PET u. PBTP), Polycarbonat (PC), Polyestercarbonaten (PEC) sowie Polyamiden (PA) und leitfähigem Ruß.

EP 0 351 660 A2

## Leitfähige Polymermischungen

Die Erfindung betrifft leitfähige Abmischungen aus thermoplastischen Kunststoffen wie Polyethylen- und butylenterephthalaten (PET u. PBTP), Polycarbonat (PC), Polyestercarbonaten (PEC) sowie Polyamiden (PA) und leitfähigem Ruß.

Leitfähige Abmischungen aus thermoplastischen Kunststoffen und Leitruß sind bekannt (z.B. EP-OS 0 111 287, US-PS-4559164).

Die verwendeten, handelsüblichen leitfähigen Ruße, z.B. Cabot Black Pearl 2000, Cabot Vulcan XC 72 und XC 72 R, Cabot Vulcan P, Degussa Philback XE-2 und Ketjen Black EC 600 zeichnen sich durch eine sehr geringe Primärteilchengröße, eine große äußere und innere Oberfläche (hohe Porosität) und damit einer großen BET-Oberfläche ($N_2$-Adsorption und Dibutylphthalat (DBP)-Adsorptionswerte) aus. Sie betragen 20 m²/g bis 100 m²/g, vorzugsweise 50 m²/g bis 100 m²/g.

Durch diese großen Oberflächen bedingt, haben die genannten Ruße einen bestimmten Feuchtigkeitsgehalt, der auch durch aufwendige technische Maßnahmen nur schwer herabzusetzen ist.

Bei der Einarbeitung solcher Ruße in Thermoplastschmelzen kann der (Rest)feuchtigkeitsgehalt auch vorgetrockneter Ruße noch zu unerwünschten Effekten führen. Beispielsweise kann die aufgeschmolzene Polymermatrix in Gegenwart der Feuchtigkeit hydrolytisch angegriffen werden, wodurch es zum Molekülabbau und einem damit verbundenen, nicht erwünschten Abfall der mechanischen Eigenschaften in daraus hergestellten Formteilen kommen kann.

Auch mit technischen Maßnahmen, wie beispielsweise die Verwendung von Einarbeitungsaggregaten mit Entgasungssystemen für die Thermoplastschmelzen wird dieser Nachteil nicht völlig überwunden.

Eine weitgehende praktische Nutzung solcher leitfähigen Abmischungen war daher nicht bzw. nur mit erheblichen Einbußen an mechanischen Eigenschaften in den daraus hergestellten Formteilen möglich.

Es hat daher nicht an anderen Lösungsvorschlägen gefehlt. Beispielsweise bestand ein denkbares Vorgehen darin, daß man diese Ruße durch Einarbeiten in hydrolytisch stabile Monomer- und/oder Polymersysteme trocknet bzw. die erhaltenen Abmischungen nachtrocknet. Jedoch können bei einem solchen Vorgehen die Rußpartikel eine die elektrische Leitfähigkeit stark behindernde Haut aus dem Einarbeitungsmonomer und/oder Polymer enthalten, was dann die elektrischen Eigenschaften des Blends beeinträchtigen kann.

Es wurde nun gefunden, daß Kunststoffe ohne Beeinträchtigung der mechanischen Parameter leitfähig gemacht werden können, wenn man als Träger des Rußes, gegebenenfalls eines Ruß-/Graphit-Gemisches, Polyarylensulfide (PAS), vorzugsweise Polyphenylensulfide (PPS) einsetzt und dieses den leitfähigen Ruß enthaltende, entfeuchtete PAS-Ruß-Gemisch (Masterbatch) mit dem Thermoplasten vermischt.

Gegenstand der Erfindung sind daher Mischungen aus

A) 95 - 30 Gew.-% eines Thermoplasten und

B) 5 - 70 Gew.-% eines Polyarylensulfid vorzugsweise Polyphenylensulfid-Kohlenstoff-Masterbatches aus

1) 10 - 30 Gew.-% Polyarylensulfid, vorzugsweise Polyphenylensulfid,

2) 5 - 90 Gew.-% Leitruß, vorzugsweise 10 -80 Gew.-% und

3) 0 - 65 Gew.-% Graphit, vorzugsweise 2,5 -70 Gew.-% und gegebenenfalls bis zu 200 Gew.-%, bezogen auf die Summe des Gewichts der Komponenten A + B weiteren Zusatzstoffen.

Als Polyarylensulfide im Sinne der Erfindung kommen z.B. die durch Umsetzung von Dihalogenaromaten, insbesondere von z.B. p-Dichlorbenzol mit Schwefelspendern erhältlichen linearen und verzweigten Polykondensate in Betracht (z.B. US-PS 3 354 129, EP-OS 171 021).

Erfindungsgemäß geeignete Ruße sind die bereits eingangs beschriebenen, leitfähigen handelsüblichen Ruße.

Erfindungsgemäß geeignete Graphite sind Graphitpulver oder Stäube, die beispielsweise als Elektrodengraphit in einem breiten Kornspektrum mit Partikeldurchmessern bis zu 5 mm handelsüblich sind.

Bevorzugt werden Graphitpulver mit mittlerer Teilchengröße bis zu 1 mm, bevorzugt bis 0,5 mm Durchmesser.

Erfindungsgemäß können thermoplastische Kunststoffe verwendet werden, z.B. ABS, Polycarbonat, Makrolon®, Polyester, Polyestercarbonate, Polyethylenterephthalat, Polybutylenterephthalat, Polyamide, Polyetheramide, Polyetherketone, Polysulfone, Polyesteretherketone (PEEK), Polyethersulfone usw. Die thermoplastischen Kunststoffe können einzeln oder als Gemisch verwendet werden.

Als Mischungen von Thermoplasten seien beispielsweise genannt: Mischungen aus Polycarbonat/ABS, Polyamid/Polyetheramid, Polyethersulfone, Polyester usw.

Die thermoplastischen Kunststoffe können weiterhin 0,1 bis 20 Gew.-% Polyphenylenoxide (PPO), bezogen auf Thermoplast, enthalten.

Weiterhin können erfindungsgemäß übliche Zusatzstoffe wie Entformungsmittel, Gleitmittel, Glasfasern, Glaskugeln, Glimmer, Talk, Pigmente, Metallverbindungen wie Metalloxide usw. zugesetzt werden.

Die Herstellung der erfindungsgemäßen Abmischungen aus Polyarylensulfiden, Ruß und Graphit und gegebenenfalls weiterer Füllstoffe kann über die bekannten Compoundierverfahren erfolgen.

Die erfindungsgemäßen Formmassen können auf übliche Weise zu geformten Gegenständen, Halbzeugen, Fasern und Folien verarbeitet werden.

Beispiele

| Grundrezeptur | |
|---|---|
| Polyarylensulfid, vorzugsweise Polyphenylensulfid (niedrig viskos) | 30 Gew.-% |
| Leitruß CABOT ®Vulcan XC 72 | 58 Gew.-% (46,6) |
| Graphit (Fa. Merck) | 12 Gew.-% (23,4) |

Die beschriebenen Ausgangsstoffe wurden dosiert einem Doppelschneckenextruder mit Entgasungsvorrichtung zugegeben. Die Temperatur bei der Compoundierung kann zwischen 320°C and 360°C gewählt werden.

| elektrische Kennwerte | |
|---|---|
| spezifischer Oberflächenwiderstand (nach DIN 53 596, VDE 0303 Teil 3, Potentialmeßmethode) | 1 Ohm |
| spezifischer Durchgangswiderstand (nach DIN 53 596, VDE 0303 Teil 3, Potentialmeßmethode) | 0.2 Ohm · cm |

Beispiele leitfähige Polycarbonat-Abmischungen

Beispiel 1:

Zumischung von 20 Gew.-% des leitfähigen Grundcompounds
Die Abmischung hat folgende Zusammensetzung

| Polyphenylensulfid (Tedur®) | 6,0 Gew.-% |
|---|---|
| Polycarbonat | 80,0 Gew.-% |
| Leitruß Cabot ®Vulcan XC 72 | 11,6 Gew.-% |
| Graphit | 2,4 Gew.-% |

| elektrische Kennwerte | |
|---|---|
| spezifischer Oberflächenwiderstand (nach DIN 53 596, VDE 030 Teil 3, Potentialmeßmethode) | $10^5$ Ohm |
| spezifischer Durchgangswiderstand (nach DIN 53 596, VDE 030 Teil 3, Potentialmeßmethode) | $10^4$ Ohm.cm |

| mechanische Kennwerte | |
|---|---|
| Biegefestigkeit (DIN 53 452, ISO/R 178) | 69 N/mm$^2$ |
| Randfaserdehnung bei Höchstkraft | 8,0 % |
| Biege- E- Modul (DIN 53 457) | 2 600 N/mm$^2$ |
| Schlagzähigkeit (ISO/R 180) | 82 KJ/m$^2$ |

Beispiel 2:

Zumischung von 30,0 Gew.-% des leitfähigen Grundcompounds
Die Abmischung hat folgende Zusammensetzung

| | |
|---|---|
| Polyphenylensulfid (Tedur®) | 9,0 Gew.-% |
| Polycarbonat | 70,0 Gew.-% |
| Leitruß Cabot ®Vulcan XC 72 | 17,4 Gew.-% |
| Graphit | 3,6 Gew.-% |

| elektrische Kennwerte | |
|---|---|
| spezifischer Oberflächenwiderstand (nach DIN 53 596, VDE 030 Teil 3, Potentialmeßmethode) | $2,1 \cdot 10^3$ Ohm |
| spezifischer Durchgangswiderstand (nach DIN 53 596, VDE 0300 Teil 3, Potentialmeßmethode) | $5,8 \cdot 10^2$ Ohm.cm |

| mechanische Kennwerte | |
|---|---|
| Biegefestigkeit (DIN 53 452, ISO/R 178) | 72 N/mm$^2$ |
| Randfaserdehnung bei Höchstkraft | 6.0% |
| Biege-E-Modul (DIN 53 457) | 2900 N/mm$^2$ |
| Schlagzähigkeit (ISO/R 180) | 54 KJ/m$^2$ |

Beispiel 3:

Zumischung von 40,0 Gew.-% des leitfähigen Grundcompounds
Die Abmischung hat folgende Zusammensetzung

| Polyphenylensulfid | 12,0 Gew.-% |
| Polycarbonat | 60,0 Gew.-% |
| Leitruß Cabot ®Vulcan XC 72 | 26,2 Gew.-% |
| Graphit | 4,8 Gew.-% |

| elektrische Kennwerte | |
| --- | --- |
| spezifischer Oberflächenwiderstand (nach DIN 53 596, VDE 0303, Potentialmeßmethode) | 0.7 •10³Ohm |
| spezifischer Durchgangswiderstand (nach DIN 53 596, VDE 0303, Potentialmeßmethode) | 500 Ohm.cm |

| mechanische Kennwerte | |
| --- | --- |
| Biegefestigkeit (DIN 53 452, ISO/R 178) | 66 N/mm² |
| Randfaserdehnung bei Höchstkraft | 4 % |
| Biege-E-Modul (DIN 53 457) | 3200 N/mm² |
| Schlagzähigkeit (ISO/R 180) | 39 KJ/m² |

## Ansprüche

1. Mischungen aus
A) 95 - 30 Gew.-% eines Thermoplasten und
B) 5 - 70 Gew.-% eines Polyarylensulfid-Kohlenstoff-Masterbatches aus
1) 10 - 30 Gew.-% Polyarylensulfid, vorzugsweise Polyphenylensulfid,
2) 5 - 90 Gew.-% Leitruß und
3) 0 - 65 Gew.-% Graphit und
gegebenenfalls bis zu 200 Gew.-%, bezogen auf die Summe des Gewichts der Komponenten A + B weitere Zusatzstoffe.

2. Abmischungen nach Anspruch 1, dadurch gekennzeichnet, daß als Thermoplast A) Polycarbonat oder Polyestercaronbat eingesetzt werden.

3. Abmischungen nach Anspruch 1, dadurch gekennzeichnet, daß als Thermoplast Polyester, vorzugsweise Polyethylenterephthalat oder Polybutylenterephthalat eingesetzt werden.

4. Abmischungen nach Anspruch 1, dadurch gekennzeichnet, daß als Thermoplast Polyamide, Polyetheramid, Polyetherketone, PEEK, Polyethersulfone und PES eingesetzt werden.

5. Abmischungen nach Anspruch 1, dadurch gekennzeichnet, daß Mischungen von Thermoplasten eingesetzt werden.

6. Abmischungen nach Anspruch 5, dadurch gekennzeichnet, daß Thermoplast-Mischungen aus Polycarbonaten und ABS eingesetzt werden.

7. Abmischungen nach Anspruch 5, dadurch gekennzeichnet, daß Thermoplast-Mischungen eingesetzt werden, die PPO enthalten.

8. Verwendung von Mischungen des Anspruchs 1 zur Herstellung von geformten Körpern.